# EUROPEAN PATENT APPLICATION

(11) **EP 3 819 321 A1**
(43) Date of publication of application: **12.05.2021**
(21) Application number: 19306441.7
(22) Date of filing: 07.11.2019
(51) Int. Cl.: C08G 18/12, C08G 18/28, C08G 18/32, C08G 18/40, C08G 18/42, C08G 18/48, C08G 18/66, C08G 18/76, C08G 18/83, C09J 175/06, C09J 175/08, B65D 81/34

(54) **TWO-COMPONENT ADHESIVE COMPOSITION**

(71) Applicant: BOSTIK SA, 92700 Colombes (FR)
(72) Inventor: YANG, Jing, Shanghai, Shanghai 201108 (CN); WENG, Chengfei, Shanghai, Shanghai 201108 (CN)
(74) Representative: Bandpay & Greuter

(57) **Abstract**

The invention relates to a two-component composition, comprising: a component A obtained by reacting: a polyisocyanate compound; at least one of a polyether polyol or a polyester polyol; and an amino-silane compound; and; a component B comprising: at least one of a polyether polyol or a polyester polyol; an epoxy-silane compound; and an additional polyol. The invention further relates to the use of the two-component composition as an adhesive or a coating.

## Description

### TECHNICAL FIELD

The present invention relates to a two-component composition and the uses of said composition. The invention also relates to articles made with this composition.

### TECHNICAL BACKGROUND

Polyurethanes can be used as adhesives for various substrates, including textile fabrics, plastic, wood and glass. Typically, prior to use, such polymers are dissolved in an organic solvent. However, solvent-based adhesives face health and environmental legislation aimed at reducing volatile organic compounds (VOC) and hazardous air pollutant (HAP) emissions. Therefore, environmentally friendly solvent-free adhesives have started gaining ground, as consumers tend to pay more attention to the safety of the packages and the products used and to environmental protection.

Nowadays, solvent-free adhesives take the form of a two-component composition, the components of which are mixed together by the user before bonding, to form a reaction mixture which subsequently hardens after application to the substrates to be bonded. Commonly, a first component of the composition comprises an isocyanate compound while a second component of the composition comprises a compound capable of reacting with the isocyanate compound. Although such compositions are environmentally friendly, they also present a certain number of disadvantages. For example, due to the absence of solvent, the viscosity of the composition is high, which necessitates its application in higher temperatures, in order to obtain an even and good-quality coating. Furthermore, such compositions present a low anti-corrosion resistance as well as a low steaming resistance. A technique that was developed in order to obtain adhesives with lower viscosity was to reduce the molecular weight of the adhesive. However, the result was to obtain adhesives with low adhesive strength especially in high temperatures and vapor conditions. This may present a problem especially for food, medical and infant product packaging which requires long-term and high-temperature sterilization.

Document CN 102604583 relates to a solvent-free laminating adhesive suitable for flexible packaging, the adhesive comprising a first component formed by reacting a polyhydroxy compound and a polyisocyanate compound, and a second component comprising at least one vegetable oil polyol, a curing accelerator and a synthetic modifier obtained by reaction of a silane coupling agent with a polyol.

Document CN 109370500 relates to a polyurethane adhesive comprising a first component which is an isocyanate-terminated polyurethane prepolymer and a second component comprising a hydroxy group.

Therefore, there is a need for providing an environmentally friendly composition having good adhesion properties, even at high temperatures and after a steam treatment, the composition being able to lead to good-quality coatings.

### SUMMARY OF THE INVENTION

It is a first object of the invention to provide a two-component composition, comprising:
- a component A obtained by reacting:
   - a polyisocyanate compound;
   - at least one of a polyether polyol or a polyester polyol; and
   - an amino-silane compound; and;
- a component B comprising:
   - at least one of a polyether polyol or a polyester polyol;
   - an epoxy-silane compound; and
   - an additional polyol.

According to some embodiments, the polyisocyanate compound is a diisocyanate compound, preferably selected from 4,4'-diphenylmethane-diisocyanate, 2,4'-diphenylmethane-diisocyanate, isophorone diisocyanate, and carbodiimide diphenylmethane diisocyanate.

According to some embodiments, the content of polyisocyanate in component A is from 30 to 90 % by mass, and preferably from 50 to 70 % by mass relative to the total mass of component A.

According to some embodiments, both a polyether polyol and a polyester polyol are present in component A; and/or both a polyether polyol and a polyester polyol are present in component B.

According to some embodiments, the polyether polyol in component A is different form the polyether polyol in component B and/or the polyester polyol in component A is different form the polyester polyol in component B.

According to some embodiments, the polyether polyol in component A and/or the polyether polyol in component B are chosen from polyethylene glycol, polypropylene glycol and polybutylene glycol.

According to some embodiments, the polyester polyol in component A and/or the polyester polyol in component B comprises one or more monomers of sebacic acid, adipic acid, isophthalic acid, terephthalic acid, and one or more monomers of ethylene glycol, propylene glycol, diethylene glycol, neopentyl glycol, 1,4-butanediol and 1,6-hexandiol.

According to some embodiments, the content of polyether polyol in component A is from 5 to 50 % by mass, and preferably from 10 to 30 % by mass relative to the total mass of component A, and/or the content of polyether polyol in component B is from 5 to 50 % by mass, and preferably from 10 to 30 % by mass relative to the total mass of component B.

According to some embodiments, the content of polyester polyol in component A is from 1 to 40 % by mass, and preferably from 5 to 20 % by mass relative to the total mass of component A, and/or the content of polyester polyol in component B is from 50 to 90 % by mass, and preferably from 60 to 80 % by mass relative to the total mass of component B.

According to some embodiments, the amino-silane is chosen from 3-aminopropyl-methyl-diethoxysilane, 3-aminopropyl-methyl-triethoxysilane, N-2-aminoethyl-aminopropyl-methyl-triethoxysilane, bis-[3-(trimethoxysilyl)propyl]amine, and bis-[3-(triethoxysilyl)propyl]amine.

According to some embodiments, the content of amino-silane in component A is from 0.01 to 10 %, and preferably from 0.1 to 5 % relative to the total mass of component A.

According to some embodiments, the epoxy-silane is chosen from (3-glycidyloxypropyl)trimethoxysilane, (3-glycidoxypropyl)methyldiethoxysilane and 2-(3,4-epoxycyclohexyl)ethyltriethoxysilane.

According to some embodiments, the content of epoxy-silane in component B is from 0.01 to 10 %, and preferably from 0.1 to 5 % relative to the total mass of component B.

According to some embodiments, the additional polyol has a molecular weight from 50 to 300 g/mol, and preferably from 100 to 200 g/mol.

According to some embodiments, the content of the additional polyol in component B is from 0.1 to 20 % by mass, preferably from 0.5 to 10 % by mass, and more preferably from 0.5 to 5 % by mass relative to the total mass of component B.

According to some embodiments, the additional polyol is different from a polyether polyol and a polyester polyol.

According to some embodiments, the additional polyol is chosen from trimethylolpropane, glycerol, trimethylolethane and 1,2,6-hexanetriol.

According to some embodiments, the hydroxyl functionality of the polyether polyol and/or of the polyester polyol and/or the additional polyol is from 2 to 10, and preferably 2 or 3.

According to some embodiments, the mass ratio of component A to component B is from 0.5 to 20, and preferably from 1 to 10.

It is a second object of the invention to use the composition described above, as an adhesive for bonding two substrates together, or as a coating on the surface of a substrate.

It is a further object of the invention to provide an article comprising at least one layer obtained by crosslinking the composition described above.

It is a further object of the invention to provide a method for preparing the article described above, comprising:
- mixing component A with component B;
- applying said mixture on the surface of a substrate; and
- optionally bringing this surface into contact with the surface of an additional substrate.

The present invention makes it possible to address the need mentioned above. In particular the invention provides an environmentally friendly composition having good adhesion properties, even at high temperatures and after a steam treatment, the composition being able to lead to good-quality coatings.

This is achieved by the use of a two-component composition comprising a component A obtained by reacting a polyisocyanate compound; at least one of a polyether polyol or a polyester polyol; and an amino-silane compound, and a component B comprising at least one of a polyether polyol or a polyester polyol; an epoxy-silane compound; and an additional polyol.

As far as component A is concerned, the polyisocyanate compound can react with the hydroxy groups present on the polyether polyol and/or the polyester polyol, in order to form a urethane prepolymer comprising isocyanate extremities. The amino-silane can react with an isocyanate group either of the polyisocyanate compound, or of the urethane prepolymer comprising isocyanate extremities. As far as component B is concerned, the compounds present do typically not react with each other. Therefore, when component A is mixed with component B, the hydroxy groups of the polyether polyol and/or the polyester polyol and the additional polyol can react with the isocyanate extremities of the urethane prepolymer of component A to form a polyurethane adhesive. The epoxy-silane (or more particularly the hydroxy groups formed by reaction of the epoxy-silane with water present in component B or water deriving from humidity of the ambient air) may also react with the isocyanate extremities of the prepolymer. The presence of polyester polyols in the mixture makes it possible to increase heat resistance but also improve the adhesion properties of the final product. In addition, the silane compounds can act as "molecular bridges" between the adhesive and the substrate in order to increase the bonding strength and therefore the adhesive properties of the final polyurethane adhesive. As for the additional polyol, preferably of small molecular weight, it can act as a cross-linking agent in order to increase heat resistance and mechanical properties of the adhesive.

Advantageously, the composition of the invention has an appropriately low viscosity.

### DESCRIPTION OF EMBODIMENTS

The invention will now be described in more detail without limitation in the following description.

The invention relates to a two-component composition comprising a first part (component A) and a second part (component B).

### Component A

Component A is obtained by reacting:
- a polyisocyanate compound;
- at least one of a polyether polyol or a polyester polyol; and
- an amino-silane compound.

By *"polyisocyanate"* is meant a compound comprising at least two isocyanate groups. According to preferred embodiments, the polyisocyanate compound is a diisocyanate.

Compounds derived from diisocyanates such as biurets, uretdiones, isocyanurates, allophanates and oligomeric diisocyanates can also be used in the context of the invention.

For example, component A may comprise one or more polyisocyanate compounds chosen from alkylene diisocyanates, cycloalkylene diisocyanates, aromatic diisocyanates and aliphatic-aromatic diisocyanates.

Specific examples include ethylene-1,2-diisocyanate, propylene-1,3-diisocyanate, butylene-1,4-diisocyanate, pentamethylene-1,5-diisocyanate (PDI), 1,6-hexamethylene-diisocyanate (HDI), 2,4-toluene-diisocyanate (2,4-TDI), 2,6-toluene-diisocyanate (2,6-TDI), 1,3-cyclopentylene-diisocyanate, 1,4-cyclohexylene-diisocyanate, 1,2-cyclohexylene-diisocyanate, isophorone diisocyanate (IPDI), 4,4'-diphenylmethane-diisocyanate (4,4'-MDI), 2,4'-diphenylmethane-diisocyanate (2,4'-MDI), 2,2'-diphenylmethane-diisocyanate (2,2'-MDI), 4,4'-diphenylpropane-diisocyanate (DPDI), m-xylylene diisocyanate (m-XDI), tetramethylxylene diisocyanate (TMXDI), 1,4-naphtylene-diisocyanate, 1,5-naphtylene-diisocyanate, m-phenylene diisocyanate (MPDI), p-phenylene diisocyanate (PPDI), 4,4'-diphenylsulphone-diisocyanate, furfurylene diisocyanate, carbodiimide diphenylmethane diisocyanate, 4,4',4"-triisocyanatotriphenylmethane, 1,3,5-benzene triisocyanate, isocyanurate of HDI, isocyanurate of TDI, isocyanurate of m-XDI, isocyanurate of IPDI (VESTANAT® T1890/100 commercialized by EVONIK), allophanate of HDI (TOLONATE X FLO 100 commercialized by VENVOREX), biurea of HDI, uretdione of HDI (DESMODUR N 3400 commercialized by COVESTRO), glycerol adduct/TDI, TDI adduct /trimethylolpropane, m-XDI adduct /glycerol, m-XDI adduct /trimethylolpropane (TAKENATE® D-110N commercialized by MITSUI CHEMICALS, m-H6XDI adduct /trimethylolpropane (TAKENATE® D-120N commercialized by MITSUI CHEMICALS.

According to preferred embodiments, the polyisocyanate compound can be chosen from 4,4'-diphenylmethane-diisocyanate, 2,4'-diphenylmethane-diisocyanate, isophorone diisocyanate and carbodiimide diphenylmethane diisocyanate.

The polyisocyanate compound can be present in a content from 30 to 90 % by mass, and preferably from 50 to 70 % by mass relative to the total mass of component A. For example, the polyisocyanate compound can be present at an amount from 30 to 35 %; or from 35 to 40 %; or from 40 to 45 %; or from 45 to 50 %; or from 50 to 55 %; or from 55 to 60 %; or from 60 to 65 %; or from 65 to 70 %; or from 70 to 75 %; or from 75 to 80 %; or from 80 to 85 %; or from 85 to 90 % by mass.

Together, the polyether polyol(s) and/or polyester polyol(s) may be present at an exemplary amount of from 10 to 50% by mass, and preferably from 20 to 35% by mass, relative to the total mass of component A; for example, at an amount from 10 to 15%, or from 15 to 20%, or from 20 to 25 %, or from 25 to 30%, or from 30 to 35%, or from 35 to 40%, or from 40 to 45%, or from 45 to 50% by mass.

By *"polyether polyot*" is meant a polymer comprising a main chain comprising ether bonds and extremities comprising hydroxy groups. By *"polyester polyol*" is meant a polymer comprising a main chain comprising ester bonds and extremities comprising hydroxy groups.

According to some embodiments, only one or more polyether polyols are present in component A. In this case, component A is devoid of polyester polyols.

According to other embodiments, only one or more polyester polyols are present in component A. In this case, component A is devoid of polyether polyols.

According to other, preferred, embodiments, component A comprises both a polyether polyol and a polyester polyol. In this case, component A can comprise one or more polyether polyols and one or more polyester polyols.

The polyether polyol according to the invention can be obtained by polymerization of one or more epoxides. Such epoxides may be ethylene oxide, propylene oxide, butylene oxide, tetrahydrofuran, styrene oxide and epichlorohydrin.

Therefore, the polyether polyol can be chosen from polyethylene glycol, polypropylene glycol, polybutylene oxide, poly(tetramethylene ether) glycol, poly(styrene oxide) and poly(epichlorohydrin).

Preferably, the polyether polyol is chosen from polyethylene glycol, polypropylene glycol and polybutylene oxide. It is preferable that the polyether polyol according to the invention comprises secondary hydroxy groups.

The or each polyether polyol in component A may have a molecular weight from 300 to 2500 g/mol, and preferably from 400 to 2000 g/mol. For example, it may have a molecular weight from 300 to 400 g/mol; or from 400 to 500 g/mol; or from 500 to 600 g/mol; or from 600 to 700 g/mol; or from 700 to 800 g/mol; or from 800 to 900 g/mol; or from 900 to 1000 g/mol; or from 1000 to 1100 g/mol; or from 1100 to 1200 g/mol; or from 1200 to 1300 g/mol; or from 1300 to 1400 g/mol; or from 1400 to 1500 g/mol; or from 1500 to 1600 g/mol; or from 1600 to 1700 g/mol; or from 1700 to 1800 g/mol; or from 1800 to 1900 g/mol; or from 1900 to 2000 g/mol; or from 2000 to 2100 g/mol; or from 2100 to 2200 g/mol; or from 2200 to 2300 g/mol; or from 2300 to 2400 g/mol; or from 2400 to 2500 g/mol.

The polyether polyol can be present at an amount from 5 to 50 % by mass, and preferably from 10 to 30 % by mass relative to the total mass of component A. Thus, the polyether polyol can be added at an amount from 5 to 10 %; or from 10 to 15 %; or from 15 to 20 %; or from 20 to 25 %; or from 25 to 30 %; or from 30 to 35 %; or from 35 to 40 %; or from 40 to 45 %; or from 45 to 50 % by mass.

The polyether polyol used in component A can have a hydroxyl number from 50 to 300 mg KOH/g (KOH milligrams per gram of polyol), and preferably from 100 to 200 mg KOH/g. The hydroxyl number is measured by using the DIN standard 53240-2-2017.

In addition, the polyether polyol may have a functionality from 2 to 10, and preferably 2 or 3. By "*functionality*" is meant the presence of functional groups in a molecule. In the context of the invention it is meant the number of hydroxy groups in the polyether polyol.

The polyester polyol according to the invention can result from the reaction of at least one dibasic acid residue with at least one alkylene glycol. The dibasic acid can be chosen from sebacic acid, adipic acid, isophthalic acid and terephthalic acid. According to preferred embodiments, the dibasic acid has one or more aromatic rings, therefore preferably the dibasic acid can be chosen from isophthalic acid and terephthalic acid. One or more than one (different) dibasic acids can be used to form the polyester polyol.

The alkylene glycol can be chosen from ethylene glycol, propylene glycol, diethylene glycol, neopentyl glycol, 1,4-butanediol and 1,6-hexandiol. One or more than one (different) alkylene glycols can be used to form the polyester polyol. Alternatively, the dibasic acid can react with one or more polyalkylene glycols, such as polyethylene glycol, polypropylene glycol or polybutylene oxide, in order to provide the polyester polyol according to the invention.

It is preferable, that the polyester polyol according to the invention comprises primary hydroxy groups.

The polyester polyol according to the invention may have a molecular weight from 400 to 2000 g/mol, and preferably from 500 to 1000 g/mol. For example, it may have a molecular weight from 400 to 500 g/mol; or from 500 to 600 g/mol; or from 600 to 700 g/mol; or from 700 to 800 g/mol; or from 800 to 900 g/mol; or from 900 to 1000 g/mol; or from 1000 to 1100 g/mol; or from 1100 to 1200 g/mol; or from 1200 to 1300 g/mol; or from 1300 to 1400 g/mol; or from 1400 to 1500 g/mol; or from 1500 to 1600 g/mol; or from 1600 to 1700 g/mol; or from 1700 to 1800 g/mol; or from 1800 to 1900 g/mol; or from 1900 to 2000 g/mol.

The polyester polyol can be added at an amount from 1 to 40 % by mass, and preferably from 5 to 20 % by mass relative to the total mass of component A. Thus, the polyester polyol can be added at an amount from 1 to 5 %; or from 5 to 10 %; or from 10 to 15 %; or from 15 to 20 %; or from 20 to 25 %; or from 25 to 30 %; or from 30 to 35 %; or from 35 to 40 % by mass.

The polyester polyol used in component A can have a hydroxyl number from 50 to 300 mg KOH/g (KOH milligrams per gram of polyol), and preferably from 100 to 200 mg KOH/g. The hydroxyl number is measured by using the DIN standard 53240-2-2017.

In addition, the polyester polyol may have a functionality from 2 to 10, and preferably 2 or 3. By "*functionality*" is meant the number (or the average number) of hydroxyl groups per molecule.

By "*amino-silane compound*" is meant a compound comprising at least one silicon atom linked to at least one alkoxy group and also linked to at least one amino group via a hydrocarbon chain. The amino group should have at least one hydrogen atom. Therefore the amino group is chosen from a primary or a secondary amine.

The amino-silane according to the invention can *e.g*. comprise from 1 to 5 silicon atoms, and preferably one or two silicon atoms. The silicon atom can be linked to at least one alkoxy group, preferably to at least two alkoxy groups and even more preferably to three alkoxy groups. The alkoxy groups can comprise from 1 to 10 carbon atoms, preferably from 1 to 5 carbon atoms and even more preferably they can be chosen from a methoxy group and an ethoxy group.

In addition, the amino-silane can comprise from 1 to 5 amino groups, and preferably one or two amino groups. In case more than one amino groups are present on the amino-silane compound, one amino group can be for example a primary amine while another amino group can be a secondary amine.

The amino group can be linked to the silicon atom via a hydrocarbon chain. The hydrocarbon chain can comprise from 1 to 20 carbon atoms, and preferably from 2 to 10 carbon atoms. According to some embodiments, and preferably when more than one amino groups are present, the amino group can be part of the hydrocarbon chain (two of the amines substituents are part of the hydrocarbon chain). According to other embodiments, the amino group can be a terminal group (extremity) of the hydrocarbon chain.

According to preferred embodiments, the amino-silane is chosen from 3-aminopropyl-methyl-diethoxysilane, 3-aminopropyl-methyl-triethoxysilane, N-2-aminoethyl-aminopropyl-methyl-triethoxysilane, bis-[3-(trimethoxysilyl)propyl]amine, and bis-[3-(triethoxysilyl)propyl]amine.

The amino-silane compound can be present at an amount from 0.01 to 10 %, and preferably from 0.1 to 5 % relative to the total mass of component A. Thus, the amino-silane can be added at an amount from 0.01 to 0.1 %; or from 0.1 to 1 %; or from 1 to 1.5 %; or from 1.5 to 2 %; or from 2 to 2.5 %; or from 2.5 to 3 %; or from 3 to 3.5 %; or from 3.5 to 4 %; or from 4 to 4.5 %; or from 4.5 to 5% by mass.

In some embodiments, one or more additives can be added to component A. Such additives can be selected from fillers, plasticizers, tackifying resins, solvents, UV stabilizers, moisture absorbers, fluorescent materials, rheological additives, and combinations thereof.

In order to make component A, the above-mentioned compounds can be mixed together.

According to preferred embodiments, the polyester polyol and/or the polyether polyol can first be mixed with the polyisocyanate compound. At this time, the hydroxy groups of the polyester polyol and/or the polyether polyol can react with the isocyanate groups of the polyisocyanate compound to form a urethane prepolymer comprising isocyanate extremities. Then, the amino-silane compound can be added to this mixture. At this time, the amino groups of the amino-silane compound can react either with the urethane prepolymer comprising isocyanate extremities, or with the polyisocyanate compound in order to form urethane prepolymer comprising isocyanate extremities and also silane extremities. For example, the polyester polyol and/or the polyether polyol can be mixed with the polyisocyanate compound for a duration from 30 minutes to 2 hours, and preferably from 1 to 1.5 hours, prior to the addition of the amino-silane compound.

In addition, in case a polyester polyol and a polyether polyol are used for the formation of component A, the two polyols can be mixed together prior to the addition of the polyisocyanate compound.

The reaction can take place at a temperature from 40 to 100°C, and preferably from 50 to 90°C. According to some embodiments, the temperature can remain stable during the reaction of the different compounds to form component A. According to other embodiments, the temperature may vary during the reaction of the different compounds to form component A. Notably, in case both a polyester polyol and a polyether polyol are used for the formation of component A, the two polyols can be mixed together at a temperature from 40 to 65°C, and after the addition of the polyisocyanate compound the temperature can be increased to from 70 to 90°C. Prior to the mixture of component A with component B, it is preferable to cool down the temperature of component A at a temperature lower than or equal to 50°C.

Furthermore, the urethane prepolymers may have a content in isocyanate groups from 5 to 40 %; and preferably from 10 to 20 % by mass relative to the mass of the urethane prepolymer. This content may be from 5 to 10 %; or from 10 to 15%; or from 15 to 20 %; or from 20 to 25 %; or from 25 to 30 %; or from 30 to 35 %; or from 35 to 40 % by mass relative to the mass of the urethane prepolymer.

Component A may also have a viscosity at 25°C from 1 000 to 20 000 mPa.s, preferably from 2 000 to 15 000 mPa.s, and preferably from 2 000 to 5 000 mPa.s. Viscosity is measured using a Brookfield LVT Viscometer and using the standard EN ISO 2555.

### Component B

The two-component composition and preferably component B of the two-component composition comprises at least one of a polyether polyol or a polyester polyol.

The polyether polyol can be as described above.

The polyester polyol can also be as described above. However, in the case of component B, it is preferred that the polyester polyol is devoid of aromatic rings. In other words, it is preferred that the polyester polyol is prepared from dibasic acids such as sebacic acid and adipic acid and by the alkylene glycols detailed above. Therefore, it is preferred that the polyester polyol present in component A is different from the polyester polyol present in component B.

The polyether polyol present in component B may have a molecular weight from 300 to 1500 g/mol, and preferably from 400 to 1000 g/mol. For example, it may have a molecular weight from 300 to 400 g/mol; or from 400 to 500 g/mol; or from 500 to 600 g/mol; or from 600 to 700 g/mol; or from 700 to 800 g/mol; or from 800 to 900 g/mol; or from 900 to 1000 g/mol; or from 1000 to 1100 g/mol; or from 1100 to 1200 g/mol; or from 1200 to 1300 g/mol; or from 1300 to 1400 g/mol; or from 1400 to 1500 g/mol.

Together, the polyether polyol(s) and/or polyester polyol(s) may be present at an exemplary amount of from 50 to 99% by mass, and preferably from 80 to 98% by mass, relative to the total mass of component B; for example, at an amount from 50 to 60%, or from 60 to 70%, or from 70 to 80%, or from 80 to 85%, or from 85 to 90%, or from 90 to 92%, or from 92 to 95%, or from 95 to 98% by mass.

The polyether polyol can be present in component B at a content from 5 to 50 % by mass, and preferably from 10 to 30 % by mass relative to the total mass of component B. Thus, the polyether polyol can be present at an amount from 5 to 10 %; or from 10 to 15 %; or from 15 to 20 %; or from 20 to 25 %; or from 25 to 30 %; or from 30 to 35 %; or from 35 to 40 %; or from 40 to 45 %; or from 45 to 50 % by mass.

The polyester polyol present in component B may have a molecular weight from 400 to 2000 g/mol, and preferably from 500 to 1000 g/mol. For example, it may have a molecular weight from 400 to 500 g/mol; or from 500 to 600 g/mol; or from 600 to 700 g/mol; or from 700 to 800 g/mol; or from 800 to 900 g/mol; or from 900 to 1000 g/mol; or from 1000 to 1100 g/mol; or from 1100 to 1200 g/mol; or from 1200 to 1300 g/mol; or from 1300 to 1400 g/mol; or from 1400 to 1500 g/mol; or from 1500 to 1600 g/mol; or from 1600 to 1700 g/mol; or from 1700 to 1800 g/mol; or from 1800 to 1900 g/mol; or from 1900 to 2000 g/mol.

The polyester polyol can be present in component B at a content from 50 to 90 % by mass, and preferably from 60 to 80 % by mass relative to the total mass of component B. Thus, the polyester polyol can be present at an amount from 50 to 55 %; or from 55 to 60 %; or from 60 to 65 %; or from 65 to 70 %; or from 70 to 75 %; or from 75 to 80 %; or from 80 to 85 %; or from 85 to 90 % by mass.

According to some embodiments, the polyether polyol added in case of component A is different from the polyether polyol present in component B. Alternatively, the polyether polyol added in case of component A is the same as the one present in component B.

According to some embodiments, only one or more polyether polyols are present in component B. In this case, component B is devoid of polyether polyols.

According to other embodiments, one or more polyester polyols are present in component B. In this case, component B is devoid of polyester polyols.

According to other preferred embodiments, component B comprises both a polyether polyol and a polyester polyol. In this case, component B can comprise one or more polyether polyols and one or more polyester polyols.

Apart from the polyether and/or the polyester polyol, component B comprises an additional polyol. It is preferable, that the additional polyol has a molecular weight from 50 to 300 g/mol, and preferably from 100 to 200 g/mol. For example, the additional polyol can have a molecular weight from 50 to 100 g/mol; or from 100 to 150 g/mol; or from 150 to 200 g/mol; or from 200 to 250 g/mol; or from 250 to 300 g/mol.

It is also preferred that the additional polyol should be different from a polyether polyol and a polyester polyol. Alternatively, the additional polyol can be a polyether polyol or a polyester polyol.

According to some embodiments, the additional polyol can be chosen from trimethylolpropane, glycerol, trimethylolethane and 1,2,6-hexanetriol.

The additional polyol can be present at an amount from 0.1 to 20 % by mass, preferably from 0.5 to 10 % by mass, and more preferably from 0.5 to 5 % by mass relative to the total mass of component B. Thus, the additional polyol can be present at an amount from 0.1 to 0.5 %; or from 5 to 10 %; or from 10 to 15 %; or from 15 to 20 % by mass relative to the total mass of component B.

Furthermore, the additional polyol may have a functionality from 2 to 10, and preferably 2 or 3. By "*functionality*" is meant the number of hydroxy groups in the additional polyol.

Component B further comprises an epoxy-silane compound.

By "*epoxy-silane compound*" is meant a compound comprising at least one silicon atom linked to at least one alkoxy group and also linked to at least one epoxy group via a hydrocarbon chain.

The epoxy-silane according to the invention can comprise from 1 to 5 silicon atoms, and preferably one silicon atoms. The silicon atom can be linked to at least one alkoxy group, preferably to at least two alkoxy groups and even more preferably to three alkoxy groups. The alkoxy groups can comprise from 1 to 10 carbon atoms, preferably from 1 to 5 carbon atoms and even more preferably they can be chosen from a methoxy group and an ethoxy group.

In addition, the epoxy-silane can comprise from 1 to 5 epoxy groups, and preferably one epoxy groups.

The epoxy group can be linked to the silicon atom via a hydrocarbon chain. The hydrocarbon chain can comprise from 1 to 20 carbon atoms, and preferably from 2 to 10 carbon atoms. According to some embodiments, the epoxy group can be part of the hydrocarbon chain (both of the epoxide carbons are connected to the hydrocarbon chain). According to other preferred embodiments, the epoxy group can be a terminal group (extremity) of the hydrocarbon chain (one of the epoxide carbons is connected to the hydrocarbon chain).

According to some embodiments, the epoxy-silane can also comprise one or more oxygen atoms (other than the oxygen atom present on the epoxy group) present on the hydrocarbon chain, for example forming one or more ether groups on the hydrocarbon chain.

According to preferred embodiments, the epoxy-silane is chosen from (3-glycidyloxypropyl)trimethoxysilane, (3-glycidoxypropyl)methyldiethoxysilane and 2-(3,4-epoxycyclohexyl)ethyltriethoxysilane.

The epoxy-silane compound can be present in component B at a content from 0.01 to 10 %, and preferably from 0.1 to 5 % relative to the total mass of component A. Thus, the epoxy-silane can be present at an amount from 0.01 to 0.1 %; or from 0.1 to 1 %; or from 1 to 1.5 %; or from 1.5 to 2 %; or from 2 to 2.5 %; or from 2.5 to 3 %; or from 3 to 3.5 %; or from 3.5 to 4 %; or from 4 to 4.5 %; or from 4.5 to 5% by mass.

In some embodiments, one or more additives can be added to component B. Such additives can be selected from fillers, plasticizers, tackifying resins, solvents, UV stabilizers, moisture absorbers, fluorescent materials, rheological additives, and combinations thereof.

The mixing of the compounds present in component B can be carried out at a temperature from 25 to 50°C, and preferably from 30 to 40°C.

It is preferred that the compounds present in component B do not react with each other. In this case, the reaction occurs after mixing component A with component B.

### Use of the two-component composition

The two-component composition according to the invention can be made when component A is mixed with component B. When these two components are mixed, the hydroxy groups present on the polyester polyol and/or the polyether polyol and the additional polyol present in component B can react with the isocyanate extremities of the urethane prepolymer of component A to form a polyurethane adhesive. The epoxy-silane and more particularly the hydroxy groups formed by reaction of the epoxy-silane with water present in component B or water deriving from humidity and ambient air, may also react with the isocyanate extremities of the prepolymer. Alternatively, water can be present on the surface of the substrate (a film for example) on which the two-component composition is applied and therefore the hydroxy groups are formed when component B is applied on the surface of the substrate.

The presence of silane compounds in the adhesive makes it possible to increase the adhesive strength of the adhesive with its substrate as the alkoxy groups of the silane can react with the substrate on which the adhesive is coated.

Component A can be mixed with component B at a ratio of component A to component B from 0.5 to 20, preferably from 1 to 10, and more preferably from 1 to 5. For example, this ratio can be from 0.5 to 1; or from 1 to 2; or from 2 to 4; or from 4 to 6; or from 6 to 8; or from 8 to 10; or from 10 to 12; or from 12 to 14; or from 14 to 16; or from 16 to 18; or from 18 to 20.

When component A is mixed with component B, the ratio of isocyanate (NCO) groups to hydroxy (OH) groups can be from 0.5 to 10, and more preferably from 1 to 5. For example, this ratio can be from 0.5 to 1; or from 1 to 2; or from 2 to 4; or from 4 to 6; or from 6 to 8; or from 8 to 10.

When component A is mixed with component B, the two-part composition may have a pot life at 45°C from 10 to 40 minutes. The pot life can be measured using a Brookfield RVT Viscosimeter.

Therefore, the two-component composition can be used to treat substrates. Possible substrates that can be treated with the adhesive according to the invention are for example polyethylene terephthalate (PET), cast polypropylene (CPP), retort grade cast polypropylene, nylon (NY) and aluminum substrates (Al).

According to some preferred embodiments, component A is mixed with component B prior to the coating of the two-component composition on the surface of the substrate. In this case, component A can be mixed with component B at a temperature from 30 to 60°C, and preferably at a temperature from 40 to 50°C. Then, the coating of the composition on the surface of the substrate can be carried out at a temperature from 40 to 60°C and for a duration from 12 to 72 hours.

According to other embodiments, one of the two components (A or B) can first be coated on the surface of the substrate, and then the second of the two components can be coated on the surface of the substrate on top of the first component. In this case, the reaction between component A and component B occurs on the surface of the substrate.

In both cases, the two-component composition can form a layer on the surface of the substrate. This layer can have a thickness from 1 µm to 500 mm, preferably from 10 µm to 100 mm, and more preferably from 10 µm to 10 mm.

According to some embodiments, the two-component composition according to the invention can be used as an adhesive composition, in order to bond two substrates together. Thus, after crosslinking, the composition can form an adhesive layer maintaining two substrates together. More particularly, after coating the two-component composition on the surface of a substrate, the surface of an additional substrate can be brought into contact with the coated surface, so as to bond the two substrates.

According to other embodiments, the two-component composition according to the invention can be used as a coating on the surface of a substrate. Thus, after crosslinking, the composition may form a layer covering the surface of the substrate in order, for example, to modify one or more properties of its surface.

Thus, articles manufactured after application of the composition according to the invention comprise at least one surface coated with the two-component composition.

When the two-component composition is used as a coating, it is an outer surface of the article.

When the two-component composition is used as an adhesive, it is an internal surface of the article, i.e. a surface of the article that is in contact with, for example, another surface of the article, and the two-component composition lying between these two surfaces.

After application and crosslinking, the article comprising the layer made from the composition of the invention may be subjected to a post-treatment, such as a sterilization post-treatment. This may include a retort or steam treatment. In particular, the article may be subjected to heating under pressure in the presence of water, for instance at a temperature of from 110 to 140°C (*e.g*. approximately 125°C) for a duration of from 10 minutes to 2 hours (*e.g*. from 30 to 50 minutes, such as approximately 40 minutes). This may be performed in an autoclave machine. The article may in particular be a pouch.

### EXAMPLES

The following examples illustrate the invention without limiting it.

### Example 1

Component A was prepared as described below:
A reactor was charged with a polypropylene glycol having a molecular weight of 400 g/mol at an amount of 13 % by mass, a polypropylene glycol having a molecular weight of 1000 g/mol at an amount of 16 % by mass and a polyester polyol (synthetized from the following monomers: adipic acid, isophthalic acid, terephthalic acid, ethylene glycol, diethylene glycol and propylene glycol) at an amount of 14 % by mass, and the temperature was set at a temperature between 50 and 60°C. The reactor was then charged with diphenylmethane-diisocyanate at an amount of 56 % by mass and kept at 80°C for 1.5 hours. Then 1 % of an amino-silane (bis(trimethoxysilylpropyl)amine) was added to the reactor and the temperature was kept for 30 minutes at 80°C. The temperature was then lowered to below 50°C. The NCO content of the formed prepolymer was around 13 % measured according to the standard ASTM D2572-1997(2010), and the viscosity of component A was around 12 000 mPa.s at 25°C measured with a Brookfield LVT viscosimeter and using the standard EN ISO 2555.

Component B was prepared as described below:
A reactor was charged with a polypropylene triol having a molecular weight of 450 g/mol at an amount of 20 % by mass, a polyester polyol (synthetized from the following monomers: adipic acid, ethylene glycol and diethylene glycol) having a molecular weight of 800 g/mol and hydroxyl number from 135 to 145 mg KOH/g, at an amount of 76 % by mass, trimethylolpropane at an amount of 2.5 % by mass and an epoxy-silane (3-glycidoxypropyltrimethoxysilane) at an amount of 1.5 % by mass and the temperature was set at a 40°C. Component B had a hydroxyl number from 200 to 250 mg KOH/g.

Component A was then mixed with component B at a temperature of 45°C.

The ratio of isocyanate (NCO) groups to hydroxy (OH) groups of the mixed two-component composition was 1.7 and the pot life at 45°C was 18 minutes.

The two-component composition was used as an adhesive on a first substrate comprising the following layers: polyethylene terephthalate, aluminum, nylon and RCPP (PET/AI/NY/RCPP) and on a second substrate comprising the following layers: polyethylene terephthalate, aluminum, and RCPP (PET/AI/RCPP). The weight of the coating is around 2 g/m². The final laminated substrates are cured into an oven at a temperature of 40°C for 72 hours.

A pouch was then formed from the laminated substrates, the pouch was filled with water and placed at 125°C for 40 minutes. The bonding strength value (BSV) of the adhesive was then measured before and after retort (between aluminum and nylon and between nylon and RCPP in the case of the first substrate and between aluminum and RCPP in the case of the second substrate). More particularly, after retort, a strip having a width of 15 mm was cut from the pouch and the bonding strength was tested under 90 degrees at 300 m/min using a tensile machine.

| Substrate | | BSV (N/15mm) | |
|---|---|---|---|
| | | Before retort | After retort |
| (PET/AI/NY/RCPP) | AI/NY | 3.6 | 5.6 |
| | NY/RCPP | 16 | 5.6 |
| PET/AI/RCPP | AI/RCPP | 8.3 | 6.6 |

From the above table, it can be deduced that after retort the adhesive had a good bonding strength value which corresponds to good adhesive properties and good heat resistance even after a steam treatment.

### Example 2

Component A was prepared as described below:
A reactor was charged with a polypropylene glycol having a molecular weight of 400 g/mol at an amount of 13 % by mass, a polypropylene glycol having a molecular weight of 1000 g/mol at an amount of 16 % by mass and a polyester polyol (synthetized from the following monomers: adipic acid, isophthalic acid, terephthalic acid, ethylene glycol, diethylene glycol and propylene glycol) at an amount of 14 % by mass, and the temperature was set at a temperature between 50 and 60°C. The reactor was then charged with diphenylmethane-diisocyanate at an amount of 56 % by mass and kept at 80°C for 1.5 hours. Then 1 % of an amino-silane (bis(trimethoxysilylpropyl)amine) was added to the reactor and the temperature was kept for 30 minutes at 80°C. The temperature was then lowered to below 50°C. The NCO content of the formed prepolymer was around 13 % measured according to the standard ASTM D2572-1997(2010), and the viscosity of component A was around 10 000 mPa.s at 25°C measured with a Brookfield LVT viscosimeter and using the standard EN ISO 2555.

Component B was prepared as described below:
A reactor was charged with a polypropylene triol having a molecular weight of 450 g/mol at an amount of 20 % by mass, a polyester polyol (synthetized from the following monomers: adipic acid, ethylene glycol and diethylene glycol) having a molecular weight of 800 g/mol and hydroxyl number from 135 to 145 mg KOH/g, at an amount of 76 % by mass trimethylolpropane at an amount of 2.5 % by mass and an epoxy-silane (3-glycidoxypropyltrimethoxysilane) at an amount of 1.5 % by mass and the temperature was set at a 40°C. Component B has a hydroxyl number from 200 to 250 mg KOH/g.

Component A was then mixed with component B at a temperature of 45°C.

The ratio of isocyanate (NCO) groups to hydroxy (OH) groups of the mixed two-component composition was 1.7 and the pot life at 45°C was 25 minutes.

The two-component composition was used as an adhesive on a first substrate comprising the following layers: polyethylene terephthalate, aluminum, nylon and RCPP (PET/AI/NY/RCPP) and on a second substrate comprising the following layers: polyethylene terephthalate, aluminum, and RCPP (PET/AI/RCPP). The weight of the coating is around 2 g/m². The final laminated substrates are cured into an oven at a temperature of 40°C for 72 hours.

A pouch was then formed from the laminated substrates, the pouch was filled with water and placed at 125°C for 40 minutes. The bonding strength value (BSV) of the adhesive was then measured before and after retort (between aluminum and nylon and between nylon and RCPP in the case of the first substrate and between aluminum and RCPP in the case of the second substrate). More particularly, after retort, a strip having a width of 15 mm was cut from the pouch and the bonding strength was tested under 90 degrees at 300 m/min using a tensile machine.

| Substrate | | BSV (N/15mm) | |
|---|---|---|---|
| | | Before retort | After retort |
| (PET/AI/NY/RCPP) | AI/NY | 3.5 | 5.6 |
| | NY/RCPP | 15 | 5.2 |
| PET/AI/RCPP | AI/RCPP | 9 | 6.2 |

From the above table, it can be deduced that after retort the adhesive had a good bonding strength value which corresponds to good adhesive properties and good heat resistance even after a steam treatment.

### Example 3

Component A was prepared as described below:
A reactor was charged with a polypropylene glycol having a molecular weight of 400 g/mol at an amount of 11.8 % by mass, a polypropylene glycol having a molecular weight of 1000 g/mol at an amount of 13.6 % by mass and a polyester polyol (synthetized from the following monomers: adipic acid, isophthalic acid, terephthalic acid, ethylene glycol, diethylene glycol and propylene glycol) at an amount of 12.7 % by mass, and the temperature was set at a temperature between 50 and 60°C. The reactor was then charged with diphenylmethane-diisocyanate at an amount of 60.8 % by mass and kept at 80°C for 1.5 hours. Then 1 % of an amino-silane (bis(trimethoxysilylpropyl)amine) was added to the reactor and the temperature was kept for 30 minutes at 80°C. The temperature was then lowered to below 50°C. The NCO content of the formed prepolymer was around 15 % measured according to the standard ASTM D2572-1997(2010), and the viscosity of component A was around 5 000 mPa.s at 25°C measured with a Brookfield LVT viscosimeter and using the standard EN ISO 2555

Component B was prepared as described below:
A reactor was charged with a polypropylene triol having a molecular weight of 450 g/mol at an amount of 20 % by mass, a polyester polyol (synthetized from the following monomers: adipic acid, ethylene glycol and diethylene glycol) having a molecular weight of 800 g/mol and hydroxyl number from 135 to 145 mg KOH/g, at an amount of 76 % by mass, trimethylolpropane at an amount of 2.5 % by mass and an epoxy-silane (3-glycidoxypropyltrimethoxysilane at an amount of 1.5 % by mass and the temperature was set at a 40°C. Component B had a hydroxyl number from 200 to 250 mg KOH/g.

Component A was then mixed with component B at a temperature of 45°C.

The ratio of isocyanate (NCO) groups to hydroxy (OH) groups of the mixed two-component composition was between 1.5 and 2 and the pot life at 45°C was 35 minutes.

The two-component composition was used as an adhesive on a first substrate comprising the following layers: polyethylene terephthalate, aluminum, nylon and RCPP (PET/AI/NY/RCPP) and on a second substrate comprising the following layers: polyethylene terephthalate, aluminum, and RCPP (PET/AI/RCPP). The weight of the coating is around 2 g/m². The final laminated substrates are cured into an oven at a temperature of 40°C for 72 hours.

A pouch was then formed from the laminated substrates, the pouch was filled with water and placed at 125°C for 40 minutes. The bonding strength value (BSV) of the adhesive was then measured before and after retort (between aluminum and nylon and between nylon and RCPP in the case of the first substrate and between aluminum and RCPP in the case of the second substrate). More particularly, after retort, a strip having a width of 15 mm was cut from the pouch and the bonding strength was tested under 90 degrees at 300 m/min using a tensile machine.

| Substrate | | BSV (N/15mm) | |
|---|---|---|---|
| | | Before retort | After retort |
| (PET/AI/NY/RCPP) | AI/NY | 3.6 | 6.0 |
| | NY/RCPP | 15 | 5.6 |
| PET/AI/RCPP | AI/RCPP | 9.2 | 6.0 |

From the above table, it can be deduced that after retort the adhesive had a good bonding strength value which corresponds to good adhesive properties and good heat resistance even after a steam treatment.

### Example 4

Component A was prepared as described below:
A reactor was charged with a polypropylene glycol having a molecular weight of 400 g/mol at an amount of 12.5 % by mass, a polypropylene glycol having a molecular weight of 1000 g/mol at an amount of 14.5 % by mass and a polyester polyol (synthetized from the following monomers: adipic acid, isophthalic acid, terephthalic acid, ethylene glycol, diethylene glycol and propylene glycol) at an amount of 8.4 % by mass, and the temperature was set at a temperature between 50 and 60°C. The reactor was then charged with diphenylmethane-diisocyanate at an amount of 63.6 % by mass and kept at 80°C for 1.5 hours. Then 1 % of an amino-silane (bis(trimethoxysilylpropyl)amine) was added to the reactor and the temperature was kept for 30 minutes at 80°C. The temperature was then lowered to below 50°C. The NCO content of the formed prepolymer was around 16.3 % measured according to the standard ASTM D2572-1997(2010), and the viscosity of component A was around 3 320 mPa.s at 25°C measured with a Brookfield LVT viscosimeter and using the standard EN ISO 2555.

Component B was prepared as described below:
A reactor was charged with a polypropylene triol having a molecular weight of 450 g/mol at an amount of 20 % by mass, a polyester polyol at an amount of 76 % by mass (synthetized from the following monomers: adipic acid, ethylene glycol and diethylene glycol) having a molecular weight of 800 g/mol and hydroxyl number from 135 to 145 mg KOH/g,, trimethylolpropane at an amount of 2.5 % by mass and an epoxy-silane (3-glycidoxypropyltrimethoxysilane) at an amount of 1.5 % by mass and the temperature was set at a 40°C. Component B had a hydroxyl number from 200 to 250 mg KOH/g.

Component A was then mixed with component B at a temperature of
Component A was then mixed with component B at a temperature of 45°C.

The ratio of isocyanate (NCO) groups to hydroxy (OH) groups of the mixed two-component composition was between 1.5 and 2 and the pot life at 45°C was 34 minutes.

The two-component composition was used as an adhesive on a first substrate comprising the following layers: polyethylene terephthalate, aluminum, nylon and RCPP (PET/AI/NY/RCPP) and on a second substrate comprising the following layers: polyethylene terephthalate, aluminum, and RCPP (PET/AI/RCPP). The weight of the coating is around 2 g/m². The final laminated substrates are cured into an oven at a temperature of 40°C for 72 hours.

A pouch was then formed from the laminated substrates, the pouch was filled with water and placed at 125°C for 40 minutes. The bonding strength value (BSV) of the adhesive was then measured before and after retort (between aluminum and nylon and between nylon and RCPP in the case of the first substrate and between aluminum and RCPP in the case of the second substrate). More particularly, after retort, a strip having a width of 15 mm was cut from the pouch and the bonding strength was tested under 90 degrees at 300 m/min using a tensile machine.

| Substrate | | BSV (N/15mm) | |
|---|---|---|---|
| | | Before retort | After retort |
| (PET/AI/NY/RCPP) | AI/NY | 4.8 | 7 |
| | NY/RCPP | 15.5 | 8.5 |
| PET/AI/RCPP | AI/RCPP | 9 | 12 |

From the above table, it can be deducted that after retort the adhesive had a good bonding strength value which corresponds to good adhesive properties and good heat resistance even after a steam treatment.

## Claims

1. A two-component composition, comprising:
- a component A obtained by reacting:
- a polyisocyanate compound;
- at least one of a polyether polyol or a polyester polyol; and
- an amino-silane compound; and;
- a component B comprising:
- at least one of a polyether polyol or a polyester polyol;
- an epoxy-silane compound; and
- an additional polyol.

2. The two-component composition according to claim 1, wherein the polyisocyanate compound is a diisocyanate compound, preferably selected from 4,4'-diphenylmethane-diisocyanate, 2,4'-diphenylmethane-diisocyanate, isophorone diisocyanate, and carbodiimide diphenylmethane diisocyanate.

3. The two-component composition according to any one of claims 1 or 2, having one or more of the following features:
- the content of polyisocyanate in component A is from 30 to 90 % by mass, and preferably from 50 to 70 % by mass relative to the total mass of component A;
- the content of amino-silane in component A is from 0.01 to 10 %, and preferably from 0.1 to 5 % relative to the total mass of component A;
- the content of polyether polyol in component A is from 5 to 50 % by mass, and preferably from 10 to 30 % by mass relative to the total mass of component A;
- the content of polyester polyol in component A is from 1 to 40 % by mass, and preferably from 5 to 20 % by mass relative to the total mass of component A;
- the content of polyether polyol in component B is from 5 to 50 % by mass, and preferably from 10 to 30 % by mass relative to the total mass of component B;
- the content of polyester polyol in component B is from 50 to 90 % by mass, and preferably from 60 to 80 % by mass relative to the total mass of component B;
- the content of epoxy-silane in component B is from 0.01 to 10 %, and preferably from 0.1 to 5 % relative to the total mass of component B;
- the content of the additional polyol in component B is from 0.1 to 20 % by mass, preferably from 0.5 to 10 % by mass, and more preferably from 0.5 to 5 % by mass relative to the total mass of component B.

4. The two-component composition according to any one of claims 1 to 3, wherein both a polyether polyol and a polyester polyol are present in component A; and/or both a polyether polyol and a polyester polyol are present in component B.

5. The two-component composition according to any one of claims 1 to 4, wherein the polyether polyol in component A is different form the polyether polyol in component B and/or the polyester polyol in component A is different form the polyester polyol in component B.

6. The two-component composition according to any one of claims 1 to 5, wherein:
- the polyether polyol in component A and/or the polyether polyol in component B, if present, are chosen from polyethylene glycol, polypropylene glycol and polybutylene glycol;
- the polyester polyol in component A and/or the polyester polyol in component B, if present, comprises one or more monomers of sebacic acid, adipic acid, isophthalic acid, terephthalic acid, and one or more monomers of ethylene glycol, propylene glycol, diethylene glycol, neopentyl glycol, 1,4-butanediol and 1,6-hexandiol.

7. The two-component composition according to any one of claims 1 to 6, wherein the amino-silane is chosen from 3-aminopropyl-methyl-diethoxysilane, 3-aminopropyl-methyl-triethoxysilane, N-2-aminoethyl-aminopropyl-methyl-triethoxysilane, bis-[3-(trimethoxysilyl)propyl]amine, and bis-[3-(triethoxysilyl)propyl]amine.

8. The two-component composition according to any one of claims 1 to 7, wherein the epoxy-silane is chosen from (3-glycidyloxypropyl)trimethoxysilane, (3-glycidoxypropyl)methyldiethoxysilane and 2-(3,4-epoxycyclohexyl)ethyltriethoxysilane.

9. The two-component composition according to any one of claims 1 to 8, wherein the additional polyol has a molecular weight from 50 to 300 g/mol, and preferably from 100 to 200 g/mol.

10. The two-component composition according to any one of claims 1 to 9, wherein the additional polyol is different from a polyether polyol and a polyester polyol, and preferably is chosen from trimethylolpropane, glycerol, trimethylolethane and 1,2,6-hexanetriol.

11. The two-component composition according to any one of claims 1 to 10, wherein the hydroxyl functionality of the polyether polyol and/or of the polyester polyol and/or the additional polyol is from 2 to 10, and preferably 2 or 3.

12. The two-component composition according to any one of claims 1 to 11, wherein the mass ratio of component A to component B is from 0.5 to 20, and preferably from 1 to 10.

13. The use of the composition according to anyone of claims 1 to 12, as an adhesive for bonding two substrates together, or as a coating on the surface of a substrate.

14. An article comprising at least one layer obtained by crosslinking the composition according to one of claims 1 to 12.

15. A method for preparing the article according to claim 14, comprising:
- mixing component A with component B;
- applying said mixture on the surface of a substrate; and
- optionally bringing this surface into contact with the surface of an additional substrate.
